# EUROPÄISCHE PATENTANMELDUNG

(11) **EP 1 220 400 A1**
(43) Veröffentlichungstag der Anmeldung: **03.07.2002**
(21) Anmeldenummer: 01128863.6
(22) Anmeldetag: 05.12.2001
(51) Int. Cl.: H02G 3/06

(54) **Installationskanal mit Stossstellenverbinder**

(30) Priorität: 29.12.2000 DE 20021967 U
(71) Anmelder: REHAU AG + Co, 95111 Rehau (DE)
(72) Erfinder: Schinzel, Hartmut, 95111 Rehau (DE); Peetz, Matthias, 95111 Rehau (DE); Heinl, Thomas, 95111 Rehau (DE)

(57) **Zusammenfassung**

Die Erfindung betrifft einen Installationskanal mit Stoßstellenverbinder (4), bestehend aus einem Kanalunterteil und einer vorzugsweise aufdrückbaren Abdeckung, wobei der Stoßstellenverbinder lösbar in den Installationskanal (1) einsetzbar ist, dadurch gekennzeichnet, dass der jeweils im Endbereich der Seitenwände (3) des Installationskanals einsetzbare Stoßstellenverbinder (4) vorzugsweise einen rechteckigen Querschnitt aufweist und derart ausgebildet ist, dass durch Abwinkelung eine untere (6) und ein obere Fläche (5) gebildet ist uns deren außen liegenden Längskanten in Bereiche mit Profilierung (8) unterteilt sind.

## Beschreibung

Die Neuerung betrifft einen Installationskanal mit einem Stoßstellenverbinder für die Montage von Kanalunterteilen.

Elemente zur Verbindung von Kanalunterteilen untereinander sind bekannt. Zum einen werden diese Elemente im Stoßstellenbereich eingerastet bzw. eingedrückt, nach dem die Kanalunterteile bereits montiert, d. h. an der Wand positioniert sind. Zum anderen gibt es Elemente, die in seitlich an der Kanalinnenwand angeformte Nuten geführt und verschoben werden können, bis diese in eine eingestanzte Kerbe verrasten. Bei der zuerst aufgezeigten Lösung sind die Kanäle zu positionieren, d. h. an der Wand zu befestigen, bevor die Elemente im Stoßstellenbereich eingerastet bzw. eingedrückt werden können. Ein anschließendes Verschieben /Korrigieren ist dann nicht mehr möglich, da sich die Elemente mittels ihrer Spitzen fest einschneiden.

Bei der weiteren Lösung muss durch angeformte Nuten mehr Material angewendet werden. Eine feste Arretierung ist bei Wegfall der eingestanzten Kerbe (z. B. bei Reststücken) nicht mehr möglich.

Aus der DE 78 00 248 U1 ist ein metallischer Installationskanal zum Anschluss einer Potentialausgleichsleitung und einer Erdverbindung bekannt.
Ein Klemmkörper, der in eine Nut der Kanäle einschiebbar ist, wird mittels einer Schraube an den Schenkeln der Nut kontaktiert. Ein solcher Klemmkörper dient der Erdung der Kanäle und gleichzeitig als Stoßstellenverbinder.

Nachteilig an dieser Lösung ist der relativ komplizierte Aufbau, wobei zur Befestigung in dem Installationskanal der Klemmkörper mit zusätzlichen Elementen festgehalten werden muss.

Weiterhin wird bei dieser Lösung vorausgesetzt, dass im Kanalunterteil entsprechende Tragschienen angeordnet sind.

Der Neuerung liegt nunmehr die Aufgabe zugrunde, einen Installationskanal mit einem Stoßstellenverbinder zu schaffen, wodurch die vorstehend genannten Nachteile und Schwierigkeiten vermieden, der technische Aufwand verringert und darüber hinaus die Montagearbeiten vereinfacht werden.

Diese Aufgabe wird durch die im Hauptanspruch angegebenen Merkmale gelöst. In den Unteransprüchen sind, die Lösung weiterentwickelnde und ergänzende Merkmale angegeben.

Der Installationskanal mit Stoßstellenverbinder besteht aus einem Kanalunterteil, einer vorzugsweise aufdrückbaren Abdeckung und einem Stoßstellenverbinder, der lösbar in den Installationskanal einsetzbar ist.

Der Stoßstellenverbinder kann als Metallteil oder Kunststoffteil ausgebildet sein, welche an seinen Längskanten Bereiche mit einer zahnartigen Profilierung und Bereiche ohne Profilierung aufweisen.

Die Verbindungsvorrichtung weist vorzugsweise einen rechteckigen Querschnitt auf und ist derart ausgebildet, dass durch Abwinkelung eine untere und eine obere Fläche gebildet wird, wobei die obere Fläche gebogen ausgeführt ist.

In der zwischen den Abwinkelungen verbleibenden Fläche ist mindestens eine Verstärkungssicke angeordnet. Diese kann auch mit einer länglichen Öffnung versehen sein und dient zum Eingreifen eines Werkzeuges.

Die Stoßstellenverbinder sind so ausgelegt, dass sie vor der Montage eingesetzt werden können und somit als Führung für den anzusetzenden weiteren Kanal bei der Montage dienen. Durch die Führung des zweiten, anzusetzenden Kanals kann der Montageaufwand erheblich erleichtert werden, wodurch eine Einmannmontage möglich wird.

Ein Ausrichten bzw. Korrigieren des Kanals ist durch den glatten, nicht mit einem zahnartigen Profil versehenen Bereich jederzeit möglich.

Ein Ausrichten bzw. Korrigieren des Kanals ist durch den glatten, nicht mit einem zahnartigen Profil versehenen Bereich jederzeit möglich.

Anhand eines Ausführungsbeispiels soll die Neuerung näher beschrieben werden.

Es zeigen
- Figur 1: Ausschnitt eines Installationskanals mit Stoßstellenverbinder
- Figur 2: Stoßstellenverbinder

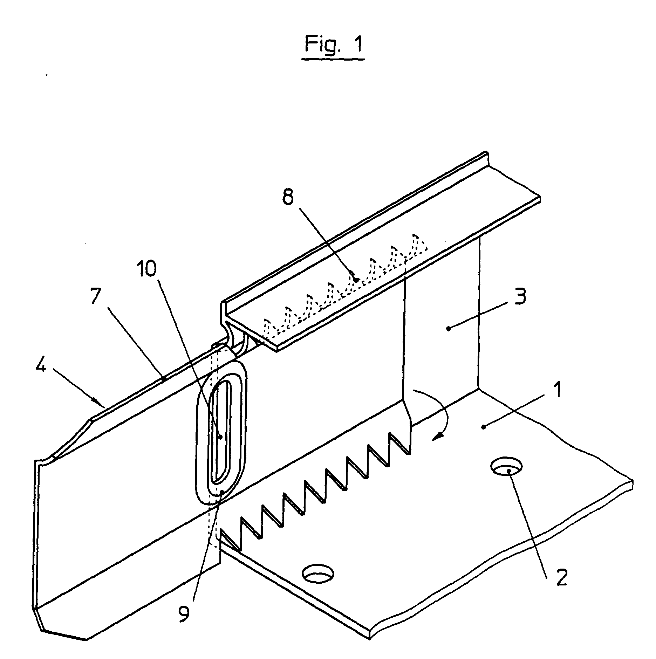

Der Instailationskanal besteht im wesentlichen aus einem Kanalunterteil 1 und einer in der Figur 1 nicht näher dargestellten Abdeckung. Im Bodenbereich des Kanalunterteils 1 sind Befestigungsbohrungen 2 angeordnet, mit deren Hilfe der Installationskanal an der Wand positioniert werden kann.
Der Stoßstellenverbinder 4 wird mit den Bereichen mit Profilierung 8 jeweils in den Endbereich des Kanalunterteils 1 an der Seitenwand 3 eingebracht. Die sowohl an der oberen Fläche 5 und unteren Fläche 6 an den Längskanten angeordneten Sägezahnprofile schneiden sich im Material des Kanalunterteils 1 ein und fixieren so den Stoßstellenverbinder 4. Der verbleibende Teil des Stoßstellenverbinders 4 ragt aus den Kanalunterteil 1 heraus und weist keine Profilierung auf.
Dieser Bereich ohne Profilierung 7 dient der Führung für das sich anschließende Kanalunterteil 1. Aufgrund der fehlenden Profilierung lässt sich das zweite sich anschließende Kanalunterteil bei der Montage verschieben bzw. ausrichten. Es ist somit eine Einmannmontage möglich.

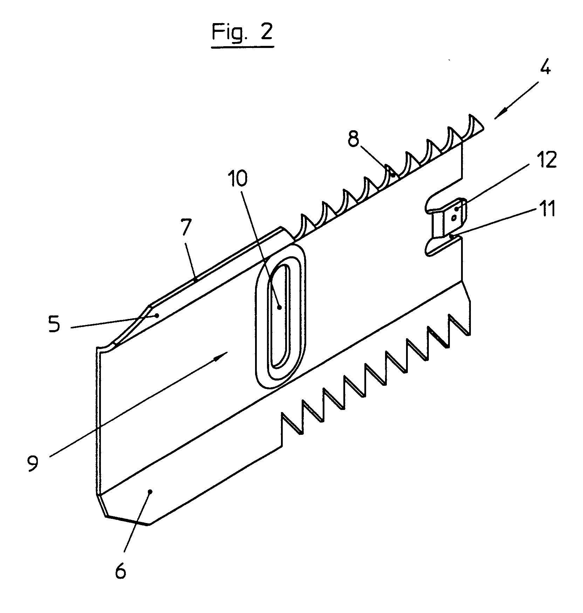

Im Bereich zwischen oberer Fläche 5 und unterer Fläche 6 ist eine Verstärkungssicke 9 vorgesehen, die wie in Figur 2 dargestellt, ein Langloch 10 zum Angreifen eines Werkzeuges aufweisen kann.

Die obere Fläche 5 ist gebogen ausgeführt und passt sich so dem Endprofil der Seitenwand 3 an. Dadurch wird erreicht, dass sich der Stoßstellenverbinder 4 nahezu vollständig an die Seitenwand 3 anlegt.

Die Klemmkräfte sind dabei so ausgelegt, dass der Stoßstellenverbinder 4 in seiner Lage nicht verrutschen kann, jedoch unter einem bestimmten Kraftaufwand noch verschoben werden kann.
Zur Erleichterung des Verschiebens ist in der Verstärkungssicke 9 ein Langloch 10 zum Eingreifen eines Werkzeuges angeordnet. Das Verschieben der Stoßstellenverbinder 4 kann beispielsweise mittels eines Schraubenziehers erfolgen, der in das Langloch 10 eingreift.

Bei Installationskanälen aus Metall ist ein Potentialausgleich vorzunehmen. Dazu sind seitlich am Stoßstellenverbinder 4 zwei Einstanzungen 11 angeordnet. Diese sind so ausgeführt, dass der verbleibende Teil zwischen den Einstanzungen 11 ein Aufsteckkontaktelement 12 bildet, auf das jeweils ein Kontaktschuh einer Potentialausgleichsleitung gesteckt werden kann.

Bei Installationskanälen aus Kunststoff kann der Stoßstellenverbinder 4 ebenfalls aus Kunststoff bestehen, wobei der Aufbau durch Weglassen der Einstanzungen 11 und des Aufsteckkontaktelementes 12 noch vereinfacht werden kann.

### Bezugszeichen

- 1 -: Kanalunterteil
- 2 -: Befestigungsbohrung
- 3 -: Seitenwand
- 4 -: Stoßstellenverbinder
- 5 -: obere Fläche
- 6 -: untere Fläche
- 7 -: Bereiche ohne Profilierung
- 8 -: Bereich mit Profilierung
- 9 -: Verstärkungssicke
- 10-: Langloch
- 11 -: Einstanzung
- 12 -: Aufsteckkontaktelement

## Patentansprüche

1. Installationskanal mit Stoßstellenverbinder, bestehend aus einem Kanalunterteil und einer vorzugsweise aufdrückbaren Abdeckung, wobei der Stoßstellenverbinder lösbar in den Installationskanal einsetzbar ist,
**dadurch gekennzeichnet,**
**dass** der jeweils im Endbereich der Seitenwände (3) des Installationskanals (1) einsetzbare Stoßstellenverbinder (4) vorzugsweise einen rechteckigen Querschnitt aufweist und derart ausgebildet ist, daß durch Abwinkelung eine untere (6) und eine obere Fläche (5) gebildet wird und deren außenliegenden Längskanten in Bereiche ohne Profilierung (7) und in Bereiche mit Profilierung (8) unterteilt sind.

2. Installationskanal nach Anspruch 1, **dadurch gekennzeichnet, dass** die Bereiche mit Profilierung (8) vorzugsweise eine Sägezahnprofilierung aufweisen.

3. Installationskanal nach Anspruch 1 und 2, **dadurch gekennzeichnet, dass** im Bereich zwischen abgewinkelter oberer (5) und unterer Fläche (6) mindestens eine Verstärkungssicke (9) angeordnet ist.

4. Installationskanal nach Anspruch 1 bis 3, **dadurch gekennzeichnet, dass** die Verstärkungssicke (9) quer zur Längsrichtung des Stoßstellenverbinders (4) angeordnet ist und eine länglich ausgebildete Öffnung (10) aufweist.
